# EUROPEAN PATENT APPLICATION

(11) **EP 4 517 277 A1**
(43) Date of publication of application: **05.03.2025**
(21) Application number: 23195261.5
(22) Date of filing: 04.09.2023
(51) Int. Cl.: G01F 1/68, G01F 1/684, G01F 1/69, G01F 1/698, G01F 1/696, G01F 1/692, G01F 1/688, G01F 5/00

(54) **A FLUID FLOW SENSING APPARATUS AND RELATED METHOD**

(71) Applicant: FAS MEDIC S.A., 1607 Palézieux (CH)
(72) Inventor: AZZONI, Davide, 1217 Meyrin (CH); GIVERNET, Damien, 01630 Saint Genis Pouilly (FR)
(74) Representative: Edson, Russell Gregory

(57) **Abstract**

This disclosure relates to an improved fluid flow sensing apparatus and a method of operating the apparatus. In particular, it relates to a fluid flow sensing apparatus having a compact design with a microcalorimetry sensor disposed in a fluid flow channel of the apparatus and a controlling means configured to provide a sensor input to the microcalorimetry sensor to set the sensitivity of the microcalorimetry sensor based on a control input corresponding to a property of the fluid.

## Description

### FIELD OF DISCLOSURE

This disclosure relates to an improved fluid flow sensing apparatus and a method of operating the apparatus. In particular, it relates to a fluid flow sensing apparatus having a compact design and a flexible means of control.

### BACKGROUND

Fluid flow sensing apparatus are typically used in fluid flow controllers, for example, mass flow controllers.

A fluid flow sensing apparatus used in a pressure-based fluid flow controller is configured to generate a sensor signal based on a difference in pressure between two points in a fluid flow channel. This difference in pressure is in turn indicative of the flow rate of fluid passing along the fluid flow channel.

EP 3 734 233 A1 discloses a fluid flow sensing apparatus have an improved flow laminator. EP 3 734 234 B1 discloses a pressure-based fluid flow sensing apparatus having a pressure compensation chamber.

The present invention provides a fluid flow sensing apparatus which provides improvements over the known devices.

### SUMMARY OF INVENTION

As discussed above, there is a need for improving the configuration of a fluid flow sensing apparatus. The fluid flow sensing apparatus of the present invention offers several advantages over prior art configurations. In particular, the present invention provides a simpler, more compact and flexible design of a fluid flow sensing apparatus when compared to prior art configurations.

According to a first aspect of this invention, a fluid flow sensing apparatus is provided comprising any or all of the following features : a first fluid flow channel having an inlet and an outlet; a microcalorimetry sensor disposed in the fluid flow channel; a controlling means for the microcalorimetry sensor, wherein the controlling means is configured to provide an input to the microcalorimetry sensor for setting the sensitivity of the microcalorimetry sensor based on a property of the fluid.

An advantage of the above configuration of the fluid flow sensing apparatus is that the sensitivity of the sensor in the present invention is directly controlled by the controlling means and is no longer dependent on the physical dimensions of components, such as the laminator, in the fluid flow sensing apparatus. In this way, the accuracy of the sensor for a wider range of different applications can be improved as its sensitivity is no longer dependent on mechanical variations used to adjust the laminating element's size. This configuration also allows for a more compact device with improved flow range. Moreover, when used for sensing gas flows, the inventors have recognised that different gases require different sensitivity settings. By providing a controlling means to directly set the sensitivity of the sensor, the present invention provides a simple configuration which can be easily adapted for different types of gases.

According to a second aspect of this invention, a fluid flow controlling apparatus is provided comprising any or all of the following features: a fluid flow sensing apparatus according to the first aspect as described above, wherein the fluid flow controlling apparatus further comprises a second fluid flow channel having an inlet and an outlet, the fluid flow controlling apparatus being configured to split a fluid flow between the second fluid flow channel and the first fluid flow channel such that the first fluid flow channel is configured to receive a predefined proportion of the fluid flowing through the second fluid flow channel.

According to a third aspect of this invention, a method for operating a fluid flow sensing apparatus is provided, in which the fluid flow sensing apparatus comprises a microcalorimetry sensor, the microcalorimetry sensor being disposed in a first fluid flow channel of a fluid flow sensing apparatus and, in which the method comprises: receiving, by a controlling means, a fluid property input, corresponding to a property of the fluid flowing through the first fluid flow channel, providing, by the controlling means, an input to the microcalorimetry sensor to set the sensitivity of the microcalorimetry sensor based on the property of the fluid.

Further embodiments of this description are described in the appended claims.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
Fig. 1 is an example of a prior art, pressure-based fluid-flow sensing apparatus used in a mass flow controller.
Fig. 2 is an example of a thermal-based fluid flow sensing apparatus 200 used in a mass flow controller.
Fig. 3 shows a block diagram of a fluid flow sensing apparatus 300 according to an embodiment of this disclosure.
Fig. 4a shows a circuit diagram for the sensor in a fluid flow sensing apparatus according to an embodiment of this disclosure.
Fig. 4b shows a schematic layout of elements of a fluid flow sensing apparatus according to an embodiment of this disclosure.
Fig. 4c shows a circuit diagram for the sensor in a fluid flow sensing apparatus according to a further embodiment of this disclosure.
Fig. 4d shows a schematic layout of elements of a fluid flow sensing apparatus according to a further embodiment of this disclosure.
Fig. 5 shows an example of empirical results based on the measurements of the sensor in Fig. 4a when different supply voltages are applied to the sensor.
Fig. 6 shows a flow chart of a method for operating a fluid flow sensing apparatus having a microcalorimetry sensor, according to an embodiment of this disclosure.

### DETAILED DESCRIPTION

The present disclosure relates to a fluid flow sensing apparatus comprising any or all of : a first fluid flow channel having an inlet and an outlet; a microcalorimetry sensor disposed in the fluid flow channel; and a controlling means for the microcalorimetry sensor, wherein the controlling means is configured to provide an input to the microcalorimetry sensor to set the sensitivity of the microcalorimetry sensor based on a property of the fluid.

As utilized herein, the term "fluid flow sensing apparatus" refers to any apparatus which may comprise at least one fluid flow channel having an inlet and outlet to enable a fluid to flow within the channel, where the apparatus is configured to determine a rate of fluid flow based on one or more properties of the fluid flowing through the channel. The fluid flow sensing apparatus may comprise at least one sensor to measure the one or more properties of the fluid flowing through the channel. The fluid may be gas or liquid or a mixture thereof such as vapour, a suspension, or a mixture of gas and fluid droplets or gas with suspended particles or aerosols, or any generally flowable medium.

As utilized herein, the term "microcalorimetry sensor" refers to any sensor configured to work using the principle of microcalorimetry. When used in a fluid flow sensing apparatus as in the present disclosure, it refers to any sensor which comprises at least a heating element for introducing and/or maintaining a known amount of heat, a first sensing element disposed in a fluid flow direction upstream of the heating element and the second sensing element is disposed in a fluid flow direction downstream of the heating element. In some embodiments, the first sensing element and the second sensing element may each comprise a resistance temperature detector, RTD or a thermopile.

As utilized herein, the phrase "disposed in the fluid flow channel" refers to the sensor being at least partially disposed in the fluid flow channel. In one embodiment, the heating element, the first sensor and the second sensor may be positioned within the fluid flow channel such that the sensor is completely disposed in the fluid flow channel. In some other embodiments the heating element may be disposed on an outer surface of the fluid flow channel such that the fluid flowing through the channel is heated by conducting heat from the outer surface of the fluid flow channel.

As utilized herein, the term "sensitivity of the microcalorimetry sensor" refers to a ratio of a change in output signal based on a change in flow rate through the sensing apparatus. It may be based upon a measurement of a heat transfer of the fluid flowing through the fluid channel compared to a unit flow rate of the fluid in the fluid flow channel. The measurement of the flow rate and/or heat transfer may be based on a difference between measured properties of the downstream sensor and/or the upstream sensor of the microcalorimetry sensor. These measured properties may be measured based upon an electrical property of the upstream and downstream resistors, such as their resistance, which may be measured by measuring or comparing a voltage drop across one or more of upstream and downstream resistors.

A sensor input provided by the controlling means to the microcalorimetry sensor may be defined as any input configured to change the output of the sensor for a given flow rate input for a given fluid type. One example of a sensor input may set a power consumed by the sensor (and hence the sensitivity of the sensor), for example, by adjusting the power of one or more components of the sensor.

In some embodiments, the sensor input provided by the controlling means to the microcalorimetry sensor may be an electrical signal. For example, the sensor input may be a voltage such as the supply voltage if the microcalorimetry sensor where the supply voltage range may be predefined for a particular configuration of the microcalorimetry sensor. The input may also be a current applied to the microcalorimetry sensor. The controlling means may be configured to provide a controlled sensor input - that is, the controller may be configured to provide an input to the microcalorimetry sensor where the input has a substantially constant value. This may be particularly useful when the fluid flow sensing apparatus is used in a fluid flow controller such as a mass flow controller.

As utilized herein, the term "property of the fluid" refers to any kinematic, thermodynamic and/or physical property of a fluid. In some embodiments, the property of the fluid may be the type of fluid. For example, when the fluid is gas, the property of the fluid may be the type or class or category of gas. Other relevant properties may include fluid density, specific heat capacity, viscosity or other physical or chemical properties of the fluid.

The sensor input provided by the controlling means may be selected by the controlling means based on a property of the fluid. In one example, the controlling means may select a predetermined value for a supply voltage or current to be applied to the sensor based on a property of the fluid passing through the fluid flow channel.

With respect to the controlling function of generating the input to the microcalorimetry sensor, the controlling means is a non-feedback system in that the controlling function of the controlling means is independent of the output (that is, the input to the microcalorimetry sensor) of the controlling means. In one example, the information regarding the property of the fluid can be provided to the controlling means by an operator using the fluid flow sensing apparatus. In another example, the controlling means itself could be configured to determine the property of the fluid flowing through the fluid flow channel.

The fluid flow sensing apparatus of the present invention offers several advantages over prior art configurations. In particular, the present invention provides a simpler, more compact and flexible design of a fluid flow sensing apparatus when compared to prior art configurations. In order to fully appreciate these advantages of the present invention, we will first briefly discuss existing prior art configurations of a fluid flow sensing apparatus.

A mass flow controller (MFC) is a typical example of a fluid flow controlling apparatus having a fluid flow sensing apparatus. The fluid flow sensing apparatus can be pressure-based or thermal-based.

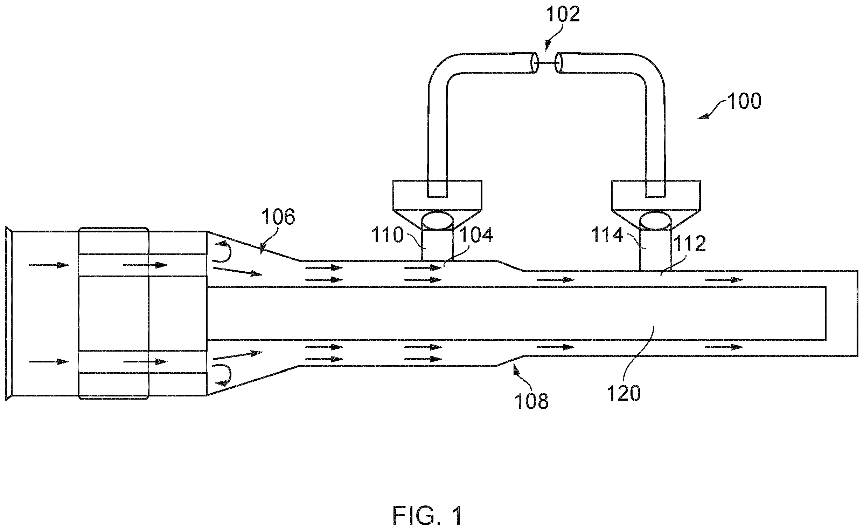

Fig. 1 shows a prior art, pressure-based fluid-flow sensing apparatus which may be used as a MFC. The fluid flow sensing apparatus 100 comprises a pressure sensor 102 in fluid communication with a first location 104 of the fluid flow channel 106 upstream of the flow restriction 108 via a first fluid conduit 110 and with a second location 112 of the fluid flow channel 106 downstream of the flow restriction 108 by a second fluid conduit 114. The pressure sensor 102 compares a first fluid pressure P1 at the first location 104 with a second fluid pressure P2 at the second location 112. The fluid sensor 102 is configured to generate a sensor signal based on the difference between P2 and P1 which in turn is indicative of the flow rate of fluid passing along the fluid flow channel 106. This information is then used by the control electronics of the MFC to control a desired flow rate through the MFC, via a fluid control valve (not shown) which may be located upstream or downstream of the sensing apparatus 100.

Fig. 1 also shows that the fluid flow sensing apparatus of the prior art comprises a flow laminating element 120 extending along the fluid flow channel 106 to encourage laminar flow and supress turbulence, thereby improving the flow sensing accuracy. In this configuration, a radius R_{L} of the laminar flow element 120 is adapted to the desired flow range of the MFC. A sensitivity of the pressure flow sensor 102 (in this case, sensitivity is a ratio of the pressure in the fluid flowing through the channel to a unit flow rate of the fluid flow) is also dependent on the radius R_{L} of the flow laminating element 120 in that the sensitivity of the flow sensor 102 increases with the radius R_{L} of the flow laminating element.

While the flow laminating element 120 helps to encourage laminar flow and supress turbulence, a drawback of the pressure-based fluid flow sensing apparatus in Fig. 1 is that the sensitivity of the sensor 102 is set by the physical size of the flow laminating element 120. The physical size of the flow laminating element 120 also places a restriction on the flow range of the MFC and the overall size of the MFC. Adjustment of the apparatus to a different flow range requires a physical replacement of the flow laminator. Regarding the present disclosure, an MFC can comprise a thermal-based fluid flow sensing apparatus as disclosed herein. A fluid flow sensing apparatus used in a thermal-based fluid flow controller typically comprises a bypass path (configured to bypass the main fluid flow channel in the fluid flow controller) and a heating element to introduce a known amount of heat into the fluid flowing into the bypass path. The fluid flow sensing apparatus is also configured to have a sensor arrangement for sensing a temperature of the fluid between two points in the fluid flow channel, the two points being positioned on either side of the heating element. The temperature measurements by the sensor arrangement can be used to determine the heat capacity of the fluid in the bypass path and this measurement can in turn be used to determine the fluid flow rate.

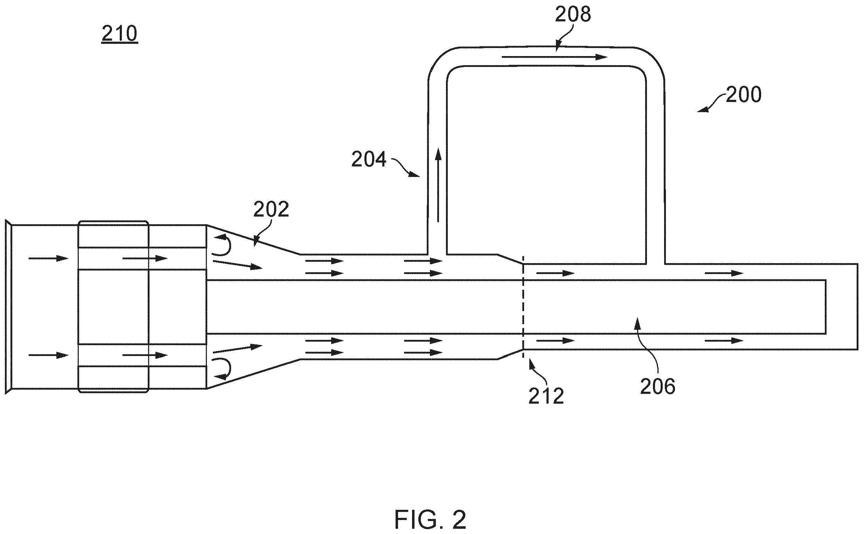

Fig. 2 shows an example of a thermal-based fluid flow sensing apparatus 200 used in a mass flow controller. As seen in Fig. 2, the MFC comprises a main flow path 202 for the fluid flowing through the MFC and a bypass path 204 adjacent to the main flow path. The flow path(s) may be formed in a manifold block 210. The fluid flow may or may not be split between the main fluid path 202 and the bypass path 204. In one mode of operation, a single flow path may be provided. The single flow path may be provided in a single path through the manifold block 210. The single flow path may be the bypass channel 204. One means for creating the single flow channel arrangement is to block the main channel 202 between the inlet and outlet of the bypass channel 204, for example around a location indicated by line 212. This can be suitable for a first, generally lower, range of flow rates of the device. In other implementations it may be desirable to handle higher flow rates. For higher flow rate implementations, it may be desirable to split the fluid flow so that only a proportion of the fluid flow passes along the bypass path 204 for flow measurement. A fluid flow splitter may be provided in the main flow path and may be implemented in some embodiments by means of a laminar flow element 206 as shown in the figure. This can direct a small fraction of the fluid flowing through the main flow path into an adjacent bypass path. The thermal-based fluid flow sensing apparatus uses a microcalorimetry sensor arrangement 208 in the fluid flow path for measuring a heat transfer effected by the fluid in the bypass path. The microcalorimetry sensor 208 typically comprises a heating element (not shown) which is configured to introduce heat into the fluid flowing through the fluid flow path. It also comprises a first upstream sensor (not shown) on a first side of the heating element and a downstream sensor (not shown) on a second side of the heating element opposite to the first side. The mass flow rate can be measured due to the capacity of the fluid to carry heat away from the upstream sensor and toward this the downstream sensor. This effect will cause a difference in temperature between the upstream sensor and the downstream sensor, which can then be used to determine the mass flow rate through the fluid flow channel. The device can be calibrated for different fluids and different fluid flow rates based upon whether it is configured in a divided flow configuration having main and bypass flow paths, or with a single fluid flow path. This information is then used by the control electronics of the MFC as a feedback signal to control a valve in the flow path to set a desired flow rate through the MFC.

As the thermal property of a fluid is dependent on the type of fluid, a thermal-based fluid flow sensing apparatus requires calibration for each type of fluid. The inventors have identified that with a fluid flow sensing apparatus implementing a thermal-based sensor, providing a means for adapting the apparatus for a wide-range of fluids and improved fluid flow range without the need for complex, expensive circuitry would be advantageous.

The inventors have realised a configuration of a fluid flow sensing apparatus which is adaptable to a wide range of fluids and fluid flow conditions. The fluid flow sensing apparatus of the present invention is configured to provide an input to a microcalorimetry sensor to set the sensitivity of the sensor based on a property of the fluid. In this way, the sensitivity of the sensor in the present invention is directly controlled by the controlling means and is no longer dependent on the physical dimensions of components, such as the laminator, in the fluid flow sensing apparatus. In this way, the accuracy of the sensor is improved as its sensitivity is no longer dependent on mechanical variations used to adjust the laminating element's size. This configuration also allows for a more compact device with improved flow range. Moreover, when used for sensing gas flows, the inventors have recognised that different gases can be more accurately measured by using different sensitivity settings. By providing a controlling means to directly set the sensitivity of the sensor, the present invention provides a simple configuration which can be easily adapted for different types of gases.

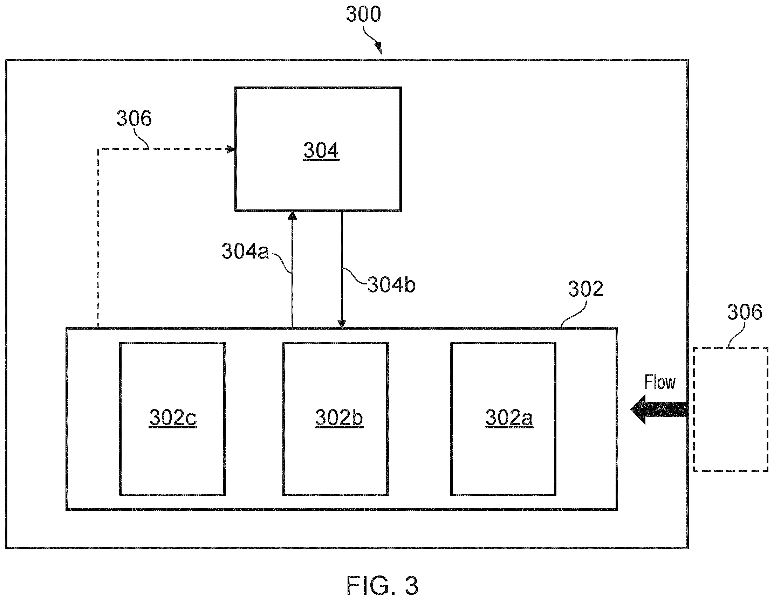

Fig. 3 shows a block diagram of a fluid flow sensing apparatus 300. The fluid flow sensing apparatus comprises a fluid flow channel having an inlet and an outlet which can form the bypass channel in a fluid flow controller, for example, in a fluid flow controller 200 as shown in Fig. 2. For simplicity these details are omitted in Fig. 3 such that this figure only schematically shows components of a fluid flow sensing apparatus according to this disclosure. As seen in Fig. 3, the fluid flow sensing apparatus comprises a sensor 302 which can be a microcalorimetry sensor, and a controlling means 304. The microcalorimetry sensor 302 comprises a first sensing element 302a, a heating element 302b and a second sensing element 302c. The first sensing element 302a is disposed in a fluid flow direction upstream of the heating element 302b and the second sensing element 302c is disposed in a fluid flow direction downstream of the heating element 302b.

Fig. 3 also shows a control valve 308 which may be part of a fluid flow control apparatus comprising the fluid flow sensing apparatus 300. As already described with respect to Fig. 2, the control valve 308 is configured to control a flow rate of the fluid flowing through a main channel of a fluid flow control apparatus and thereby also controlling a flow rate of the fluid flowing through the fluid flow channel of the fluid flow sensing apparatus. While Fig. 3 shows the control valve 308 being placed upstream of the sensor 302, in another embodiment, the control valve 308 may be placed downstream of the sensor 302 to control a fluid flow rate of a fluid flowing through the fluid flow control apparatus.

The controlling means 304 is configured to receive an input 304a indicative of a property of the fluid flowing through the fluid flow channel and generate an output 304b as an input to the sensor 302 based on the input 304a. With respect to the controlling function of generating the output 304b, the controlling means can be a non-feedback system, in that the controlling function of the controlling means is independent of the output 304b of the controlling means.

Where the fluid flow sensing apparatus 300 is used in a fluid flow control system, the controlling means may be configured to provide a controlled input 304b - that is, the controlling means may be configured to provide an input 304b to the microcalorimetry sensor where the input has a substantially constant value.

The input 304a indicative of, related to, or based upon a property of the fluid may be provided by an external source, for example, an operator operating, calibrating, or configuring the fluid flow sensing apparatus. The property of the fluid may be the type of fluid. For example, when the fluid is gas, the property of the fluid may be the type of gas. Other relevant properties may include fluid density, specific heat capacity, viscosity or other physical or chemical properties of the fluid.

The controlling means 304 may be optionally further configured to receive an output 306 generated by the microcalorimetry sensor, the output 306 being indicative of the fluid flow in the fluid flow channel based on measurements by the first sensing element 302a and the second sensing element 302c.

The controlling means 304 may be optionally further configured to provide a control input to a control valve 306 to control a desired flow rate of the fluid. Alternatively, a separate controlling means may be used within a fluid flow control apparatus having the fluid flow sensing apparatus 300 to control the control valve 306.

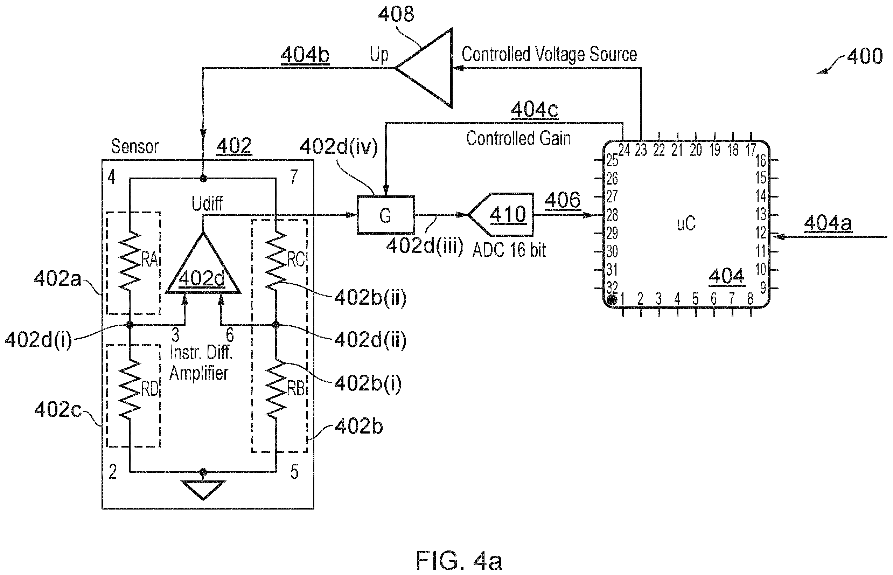

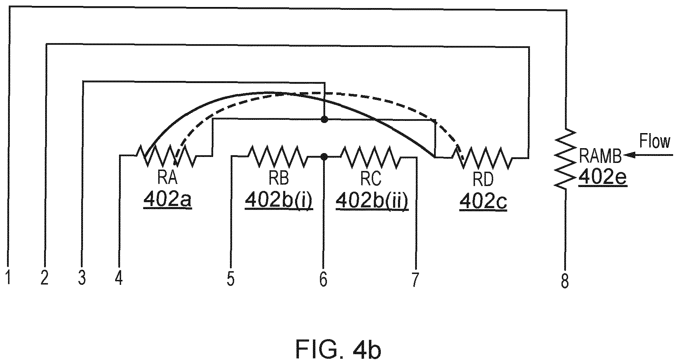

Fig. 4a shows control elements of a fluid flow sensing apparatus 400 according to this disclosure - fluid flow sensing apparatus 400 can be understood to be a specific implementation of fluid flow sensing apparatus 300 where the input 304b to the microcalorimetry sensor is an electrical signal, in this case, a supply voltage. The fluid flow sensing apparatus 400 can be used in an MFC to sense a gas flow. Fig. 4b shows a circuit diagram of the microcalorimetry sensor 402 in Fig. 4a illustrating the positioning of the different elements of the sensor 402 with respect to the direction of the fluid flow in the fluid flow channel of the fluid flow sensing apparatus. Fig. 4b shows an additional sensor 402e which may be used in the microcalorimetry sensor to measure an ambient temperature upstream of the other illustrated resistive elements.

As seen in Fig. 4a, the fluid flow sensing apparatus 400 comprises a microcalorimetry sensor 402 and a controlling means 404. The microcalorimetry sensor 402 comprises a first sensing element 402a, a heating element 402b and a second sensing element 402c.

The first sensing element is implemented as a first resistance temperature detector (RTD) 402a. The second sensing element is implemented as a second resistance temperature detector (RTD), 402c, where the second RTD 402c is in series with the first RTD 402a. As seen in Fig. 4b which is another perspective of the circuit diagram in Fig. 4a, the first RTD 402a is disposed in a fluid flow direction downstream of the heating element 402b and the second RTD 402c is disposed in a fluid flow direction upstream of the heating element 402b.

The heating element 402b comprises a fourth RTD 402b(i) and a fifth RTD 402b(ii) where the fourth RTD 402b(i) is in series with the fifth RTD 402b(ii). The sensor circuit is configured such that the first RTD 402a and the second RTD 402c are in a parallel connection with the fourth RTD 402b(i) and the fifth RTD 402b(ii).

Fig. 4a also shows a controlling means implemented as a microcontroller 404. The microcontroller 404 is configured to receive an input 404a indicative of a property of the fluid flowing through the fluid flow channel. The input 404a may be provided by an operator operating, configuring or calibrating the fluid flow sensing apparatus. The input 404a indicative of a property of the fluid can be provided by an external source. If the fluid flow sensing apparatus is used in an MFC, the input 404a can be, for example, the type of gas flowing in the MFC and hence the fluid flow sensing apparatus.

In Fig. 4a, the microcontroller 404 generates a controlled supply voltage signal 404b based on the input 404a. As noted earlier with reference to Fig. 3, with respect to the controlling function of generating the output 404b, the microcontroller 404 is a non-feedback system in that the controlling function of the microcontroller 404 means is independent of the output 404b. A voltage buffer 408 is coupled to the output of the microcontroller 404 such that a buffered supply voltage signal 404b is provided to the microcalorimetry sensor 402.

The example microcontroller 404 shown therefore sets a supply voltage of the microcalorimetry sensor 402 based on input 404a, and this in turn may set a power consumed by the sensing elements of the microcalorimetry sensor 402. Other inputs may also be used, such as by setting a current input or other electrical input to the sensor 402. In this way, the microcontroller 404 sets the sensitivity of the microcalorimetry sensor 402 based on input 404a.

Fig. 4a also shows an optional configuration where the microcontroller 404 is configured to receive an input 406 generated by the microcalorimetry sensor 402, the input 406 being indicative of the fluid flow in the fluid flow channel based on measurements by the first RTD 402a and the second RTD 402c. As seen in Fig. 4a, an instrumentation amplifier 402d is configured to receive a first input signal 402d(i) at a first node between the first RTD 402a and the second RTD 402c. The instrumentation amplifier 402d is further configured to receive a second input signal 402d(ii) at a second node between the third RTD 402b(i) and the fourth RTD 402b(ii). An amplified differential output (UDiff), 402d(iii), of the instrumentation amplifier 402 is digitized by an ADC 410 to produce the input 406 to the microcontroller 404. Fig. 4a also shows the gain block 402d(iv) of the instrumentation amplifier 402d. The microcontroller 404 may also be configured to provide a further controlled electrical signal 404c to the gain block 402d(iv) to adjust the gain G of the instrumentation amplifier 402d. This adjustment may be done such that the output 402(iv) of the amplifier 402d is amplified based on a full-scale range of the ADC 410. This can help to improve the signal-to-noise ratio of the input 406 provided to the microcontroller 404. In the implementation of Fig. 4a, UDiff (402d(iii)) will be zero if there is no fluid flowing through fluid flow channel and will have a value greater than zero if there is a fluid flowing through the fluid flow channel of the fluid flow sensing apparatus.

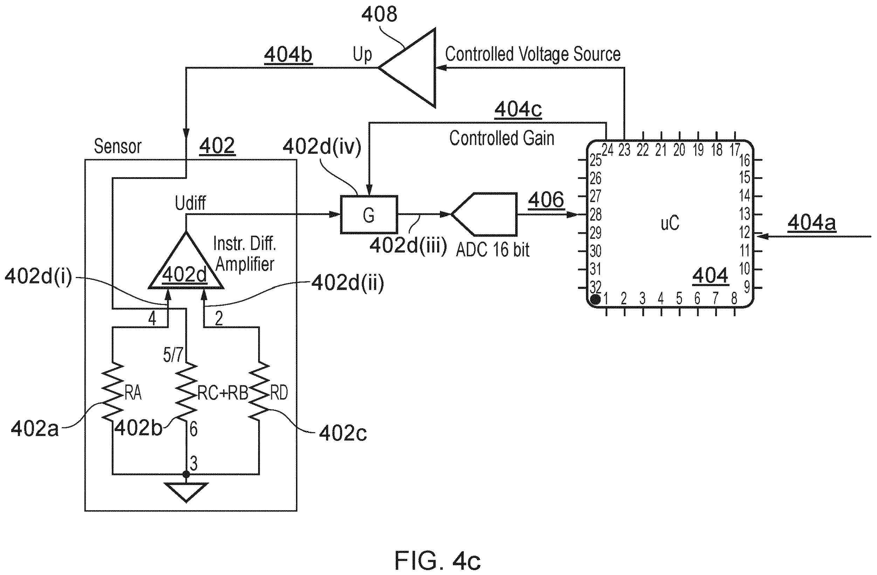

Fig. 4c shows control elements of a fluid flow sensing apparatus 400 according to another embodiment of this disclosure, which shares some common features with the embodiment shown in Figs 4a and 4b. In Fig. 4c, the controlling means 404 can be implemented in the same manner as that described with respect to Fig. 4a. The microcalorimetry sensor in Fig. 4c can differ from that of Fig. 4a in that the sensing elements, 402a and 402c, are thermopiles and preferably further in that the heating element 402b comprises any suitable resistive element(s) configured to dissipate power, for example, aluminium. As seen in Fig. 4c, thermopile sensor 402a is coupled between a first input 402d(i) of the differential amplifier 402d and a reference potential. A further thermopile sensor 402c can be coupled between a second input 402d(ii) of the differential amplifier 402d and the reference potential (typically ground). The heating element 402b in Fig. 4c is coupled between the controlled supply voltage 404b and a reference potential (typically ground). The operation of remaining circuitry in Fig. 4c, including the controlling means 404 and the instrumentation amplifier 402d can be implemented in the same manner as described with respect to the corresponding elements in Fig. 4a.

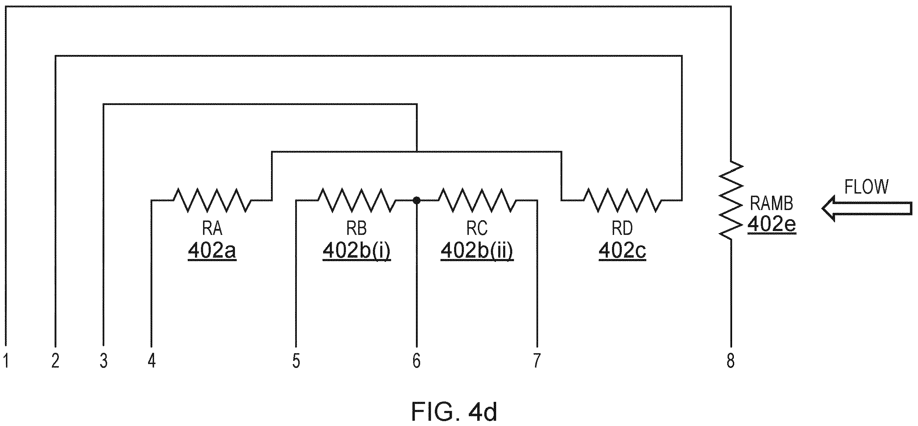

Fig. 4d shows a circuit diagram of the microcalorimetry sensor 402 of Figure 4c, illustrating a manner in which positioning can be implemented for the different elements of the sensor 402 with respect to the direction of the fluid flow in the fluid flow channel of the fluid flow sensing apparatus. In Fig. 4d, the heating element 402b comprises one or more resistive elements 402b(i) and 402b(ii), which may be arranged in parallel. In some embodiments, the resistive elements 402b(i) and 402b(ii) may be arranged in series. In some embodiments, the heating element 402b may be implemented using a single resistive element (for example, as shown in Fig. 4c). Fig. 4d also shows an additional sensor 402e which may be used in the microcalorimetry sensor 402 to measure an ambient temperature, which may for example be located upstream of the other illustrated resistive elements.

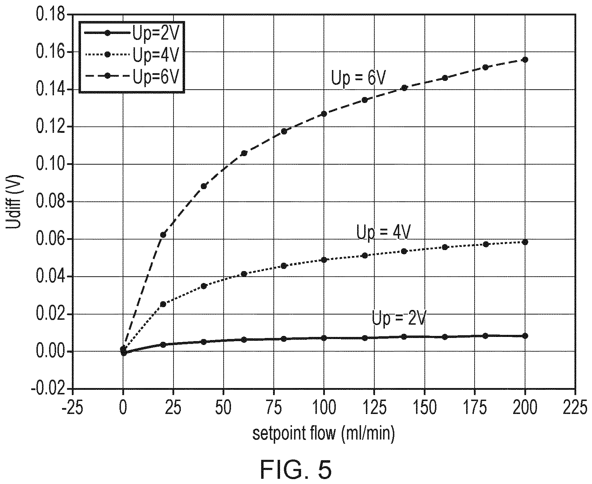

Fig. 5 shows empirical results for UDiff versus flow rate (in this case a setpoint flow rate for fluid flowing through the channel) at different supply voltages applied to the microcalorimetry sensor using the implementation of Fig 4a. As can be seen in Fig. 5, the sensitivity of the microcalorimetry sensor is dependent on the supply voltage applied to the sensor by the microcontroller. The inventors have recognised that different gases require different sensitivity settings. By providing a controlling means to directly set the sensitivity of the microcalorimetry sensor, the present invention provides a simple configuration which can be easily adapted for different types of gases. It also offers a more compact circuit when compared to the prior art configurations, as the sensitivity of the sensor is no longer dependent on the physical dimensions of components, such as the laminator, in the fluid flow sensing apparatus.

Although the implementation in Fig. 4a is described with respect to using a microcontroller 404 for generating the input 404b to the microcalorimetry sensor 402, it is not limited to this type of controller and the skilled person will understand that any other suitable controlling means can be used to generate the control signal.

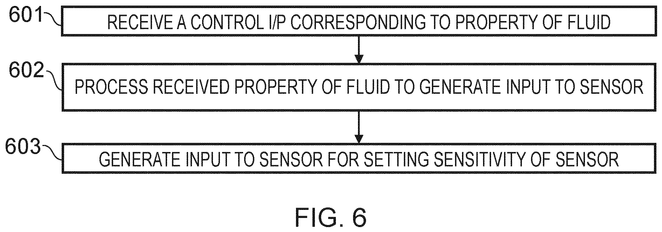

Fig. 6 shows a flow chart of a method for operating a fluid flow sensing apparatus having a microcalorimetry sensor as in the above-described examples. As seen in Fig. 6, the method comprises receiving, by the controlling means a property of the fluid flowing through the fluid flow channel (step 601) of the fluid flow sensing apparatus. The controlling means then processes the received input (step 602) and provides an input to the microcalorimetry sensor to set the sensitivity of the microcalorimetry sensor based on the property of the fluid (step 603). The property of the fluid flowing through the channel can be provided to the controlling means by an operator using the fluid flow sensing apparatus. In another example, the controlling means itself could be configured to determine the property of the fluid through the fluid flow channel.

In line with the above-described examples, the method may optionally comprise a further step (not shown) relating to receiving an input generated by the microcalorimetry sensor, the input being indicative of the fluid flow in the fluid flow channel based on measurements by the first sensing element and the second sensing element. In one example, where the input generated by the microcalorimetry sensor is an electrical signal, the controlling means can be configured to further process the input generated by the microcalorimetry sensor to improve its signal-to-noise ratio.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or nonvolatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

Although this invention has been described in terms of certain embodiments, the embodiments can be combined to provide further embodiments. In addition, certain features shown in the context of one embodiment can be incorporated into other embodiments as well.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

### Examples

Example 1 is a fluid flow sensing apparatus comprising one or more, or any combination, of: a first fluid flow channel having an inlet and an outlet; a microcalorimetry sensor disposed in the fluid flow channel; a controlling means for the microcalorimetry sensor, wherein the controlling means is configured to provide a sensor input to the microcalorimetry sensor to set the sensitivity of the microcalorimetry sensor based on a control input corresponding to a property of the fluid.

Example 2 is a fluid flow sensing apparatus according to any preceding example, wherein the controlling means is operable as a non-feedback controlling means for the provision of the input to the microcalorimetry sensor.

Example 3 is a fluid flow sensing apparatus according to any preceding example, wherein the sensor input to the microcalorimetry sensor is selectable from a plurality of constant values.

Example 4 is a fluid flow sensing apparatus according to any preceding example, wherein the sensor input is an electrical signal.

Example 5 is a fluid flow sensing apparatus according to Example 4, wherein the controlling means is configured to set the sensitivity of the microcalorimetry sensor, preferably by providing the sensor input to set a power consumption of the microcalorimetry sensor.

Example 6 is a fluid flow sensing apparatus according to Example 4 or 5, wherein the sensor input is a voltage or a current.

Example 7 is a fluid flow sensing apparatus according to Example 6, wherein the electrical signal is a supply voltage for the microcalorimetry sensor.

Example 8 is a fluid flow sensing apparatus according to any preceding example, wherein the property of the fluid is a type of the fluid.

Example 9 is a fluid flow sensing apparatus according to any preceding example, wherein the microcalorimetry sensor comprises one or more or any combination of: a heating element; a first sensing element configured to measure a first temperature and disposed in a fluid flow direction upstream of the heating element; and a second sensing element configured to measure a second temperature and disposed in a fluid flow direction downstream of the heating element.

Example 10 is a fluid flow sensing apparatus according to example 9, wherein one or more, or each, of the first sensing element and the second sensing element comprises a resistance temperature detector, RTD or thermopile, optionally in any combination.

Example 11 is a fluid flow sensing apparatus according to any preceding example, wherein the controlling means is further configured to receive a first output from the microcalorimetry sensor, the first output preferably being indicative of the flow rate of the fluid flowing in the fluid flow channel.

Example 12 is a fluid flow controlling apparatus comprising a fluid flow sensing apparatus according to any preceding example, wherein the fluid flow controlling apparatus further comprises a second fluid flow channel having an inlet and an outlet, the fluid flow controlling apparatus preferably being configured to split a fluid flow between the second fluid flow channel and the first fluid flow channel, such that the first fluid flow channel is preferably configured to receive a predefined proportion of the fluid flowing through the second fluid flow channel.

Example 13 is a fluid flow controlling apparatus according to example 12, wherein the fluid flow controlling apparatus is a mass flow controller.

Example 14 is a method for operating a fluid flow sensing apparatus having a microcalorimetry sensor, the microcalorimetry sensor being disposed in a first fluid flow channel of a fluid flow sensing apparatus, the method comprising one or more, or any combination, of : receiving, by a controlling means, a control input corresponding to a property of the fluid flowing through the first fluid flow channel; processing, by the controlling means, the fluid property input to generate a sensor input for the microcalorimetry sensor; and providing, by the controlling means, the input to the microcalorimetry sensor to set the sensitivity of the microcalorimetry sensor based on the property of the fluid.

Example 15 is a fluid flow sensing apparatus according to example 14, wherein the input is an electrical signal.

## Claims

1. A fluid flow sensing apparatus comprising:
a first fluid flow channel having an inlet and an outlet;
a microcalorimetry sensor disposed in the fluid flow channel;
a controlling means for the microcalorimetry sensor, wherein the controlling means is configured to provide a sensor input to the microcalorimetry sensor to set the sensitivity of the microcalorimetry sensor based on a control input corresponding to a property of the fluid.

2. A fluid flow sensing apparatus according to any preceding claim, wherein the controlling means is operable as a non-feedback controlling means for the provision of the input to the microcalorimetry sensor.

3. A fluid flow sensing apparatus according to any preceding claim, wherein the sensor input to the microcalorimetry sensor is selectable from a plurality of constant values.

4. A fluid flow sensing apparatus according to any preceding claim, wherein the sensor input is an electrical signal.

5. A fluid flow sensing apparatus according to claim 4, wherein the controlling means is configured to set the sensitivity of the microcalorimetry sensor by providing the sensor input to set a power consumption of the microcalorimetry sensor.

6. A fluid flow sensing apparatus according to claim 4 or 5, wherein the sensor input is a voltage or a current.

7. A fluid flow sensing apparatus according to claim 6, wherein the electrical signal is a supply voltage for the microcalorimetry sensor.

8. A fluid flow sensing apparatus according to any preceding claim, wherein the property of the fluid is a type of the fluid.

9. A fluid flow sensing apparatus according to any preceding claim, wherein the microcalorimetry sensor comprises:
a heating element;
a first sensing element configured to measure a first temperature and disposed in a fluid flow direction upstream of the heating element; and
a second sensing element configured to measure a second temperature and disposed in a fluid flow direction downstream of the heating element.

10. A fluid flow sensing apparatus according to claim 9, wherein each of the first sensing element and the second sensing element comprises a resistance temperature detector, RTD or thermopile.

11. A fluid flow sensing apparatus according to any preceding claim, wherein the controlling means is further configured to receive a first output from the microcalorimetry sensor, the first output being indicative of the flow rate of the fluid flowing in the fluid flow channel.

12. A fluid flow controlling apparatus comprising a fluid flow sensing apparatus according to any preceding claim, wherein the fluid flow controlling apparatus further comprises a second fluid flow channel having an inlet and an outlet, the fluid flow controlling apparatus being configured to split a fluid flow between the second fluid flow channel and the first fluid flow channel such that the first fluid flow channel is configured to receive a predefined proportion of the fluid flowing through the second fluid flow channel.

13. A fluid flow controlling apparatus according to claim 12, wherein the fluid flow controlling apparatus is a mass flow controller.

14. A method for operating a fluid flow sensing apparatus having a microcalorimetry sensor, the microcalorimetry sensor being disposed in a first fluid flow channel of a fluid flow sensing apparatus, the method comprising:
receiving, by a controlling means, a control input corresponding to a property of the fluid flowing through the first fluid flow channel;
processing, by the controlling means, the fluid property input to generate a sensor input for the microcalorimetry sensor; and
providing, by the controlling means, the input to the microcalorimetry sensor to set the sensitivity of the microcalorimetry sensor based on the property of the fluid.

15. A fluid flow sensing apparatus according to claim 14, wherein the input is an electrical signal.
